# DEMANDE DE BREVET EUROPEEN

(11) **EP 2 639 441 A1**
(43) Date de publication de la demande: **18.09.2013**
(21) Numéro de dépôt: 13157491.5
(22) Date de dépôt: 01.03.2013
(51) Int. Cl.: F02M 25/07, F02B 75/18

(54) **Moteur thermique avec recirculation forcée des gaz d'échappement**

(30) Priorité: 13.03.2012 FR 1252220
(71) Demandeur: PEUGEOT CITROËN AUTOMOBILES SA, 78140 Velizy-Villacoublay (FR)
(72) Inventeur: Briard, Jean-Luc, 75013 PARIS (FR)
(74) Mandataire: Ménès, Catherine

(57) **Abrégé**

L'invention porte sur un moteur (1) à cylindres (C1, C2, C3) comprenant un circuit (6) de recirculation des gaz d'échappement vers l'admission (2), lequel comprend au moins un cylindre de captage (C3), un collecteur de captage (7) amont captant les gaz d'échappement émis par ledit cylindre de captage (C3), une tubulure de recirculation (8) aval, et au moins un organe de dosage (10) conçu pour appliquer audit circuit un taux de recirculation (R_{EGR}) prédéterminé, ledit organe de dosage étant choisi parmi :
● un cylindre de captage (C3) de cylindrée (V_{C3}) différenciée, si le taux de recirculation souhaité est différent de l'inverse (1/n) du nombre (n) de cylindres de combustion (C1, C2, C3), avec V_{C3}/(V_{C1}+V_{C2}+V_{C3}) = R_{EGR} , et/ou
- une vanne de commutation (11), interposée entre le collecteur (7) amont et la tubulure (8) aval, pour diriger sélectivement le flux de gaz d'échappement vers la tubulure de recirculation (8) aval ou vers une tubulure d'échappement (3).

## Description

L'invention se rapporte au domaine des moteurs thermiques, et notamment des moteurs diesel, qui peuvent par exemple être utilisés au sein de véhicules automobiles, et qui mettent en oeuvre un circuit de recirculation des gaz d'échappement, généralement désigné par « EGR » (« Exhaust Gas Recirculation »).

Il est en effet connu, notamment par le document EP-1 299 635, de récupérer une partie des gaz d'échappement qui résultent de la combustion du mélange air-carburant dans les cylindres moteurs, afin de mélanger lesdits gaz d'échappement à l'air du circuit d'admission qui alimente lesdits cylindres moteurs.

A cet effet, de tels dispositifs présentent généralement une conduite de dérivation qui vient se piquer sur le circuit d'échappement principal pour prélever une partie des gaz d'échappement et les renvoyer vers le circuit d'admission, ladite conduite de dérivation étant en outre pourvue d'une vanne dont l'ouverture autorise les gaz d'échappement à circuler à travers ladite conduite.

Bien qu'une telle disposition présente d'indéniables avantages, notamment parce qu'elle permet de réduire certaines émissions polluantes du moteur, et plus particulièrement de limiter la formation d'oxydes d'azote, elle peut toutefois souffrir de certains inconvénients.

En premier lieu, les dispositifs de recirculation connus sont généralement relativement imprécis, dans la mesure où l'extraction des gaz d'échappement par une conduite de dérivation branchée sur le collecteur d'échappement peut être relativement aléatoire, les quantités de gaz d'échappement recueillies et réinjectées pouvant dépendre de nombreux facteurs, tels que le gradient de pression existant entre le circuit d'échappement et le circuit d'admission, qui sont susceptibles de varier dans le temps et selon les conditions d'utilisation du moteur.

Il est alors particulièrement difficile de réguler convenablement et de manière reproductible la recirculation, et en particulier d'assurer un taux de recirculation, c'est-à-dire une proportion de gaz d'échappement dans le mélange gazeux admis dans les cylindres, qui soit véritablement maîtrisé voire sensiblement constant.

A ces aléas d'extraction peuvent s'ajouter des difficultés liées à la complexité de mise en oeuvre du circuit de recirculation au sein du moteur, en particulier lorsque ledit circuit et la vanne de recirculation doivent être intégrés dans la culasse du bloc moteur.

Le but de l'invention vise par conséquent à remédier aux inconvénients susmentionnés et à proposer un nouveau moteur pourvu d'un circuit de recirculation qui, tout en présentant une structure simple et fiable, offre une bonne maîtrise du taux de recirculation des gaz d'échappement, quelle que soit la configuration du moteur ou les conditions d'utilisation de ce dernier.

Un autre but assigné à l'invention vise à proposer un nouveau moteur qui soit particulièrement léger, peu encombrant et performant au regard des normes environnementales.

Les buts assignés à l'invention sont atteints par d'un moteur thermique (à combustion interne) comprenant une pluralité de cylindres de combustion, ledit moteur étant **caractérisé en ce qu'il** est pourvu d'un circuit de recirculation forcée (et notamment dosée) des gaz d'échappement permettant de recycler dans l'admission des cylindres de combustion, selon un taux de recirculation prédéterminé, (appelé aussi « taux de consigne »), au moins une partie des gaz d'échappement produits par au moins l'un desdits cylindres, ledit circuit de recirculation comprenant au moins un cylindre de captage, choisi parmi les cylindres de combustion, ainsi qu'un collecteur de captage amont raccordé à l'échappement dudit cylindre de captage de sorte à pouvoir capter la totalité des gaz d'échappement émis par ledit cylindre de captage, et se poursuivant par une tubulure de recirculation aval apte à convoyer la totalité les gaz d'échappement captés par ledit collecteur jusqu'à l'admission des cylindres de combustion, ledit circuit de recirculation comportant au moins un organe de dosage conçu pour appliquer audit circuit la consigne de taux de recirculation, ledit organe de dosage étant choisi parmi :
- un cylindre de captage de cylindrée aménagée, si le taux de recirculation souhaité est différent de l'inverse 1/n du nombre n de cylindres de combustion, la cylindrée aménagée dudit cylindre de captage se différenciant alors de la cylindrée des autres cylindres de combustion de telle manière que le rapport de ladite cylindrée aménagée sur la cylindrée totale de l'ensemble des cylindres de combustion corresponde au taux de recirculation choisi, et/ou
- une vanne de commutation, interposée entre le collecteur de captage amont et la tubulure de recirculation aval, ladite vanne de commutation étant apte à passer d'une configuration de recirculation en circuit fermé, (configuration dans laquelle, notamment elle fait communiquer le collecteur de captage amont exclusivement avec la tubulure de recirculation aval de sorte à diriger intégralement le flux des gaz d'échappement vers l'admission des cylindres), à une configuration d'échappement en circuit ouvert (configuration dans laquelle ladite vanne met en communication le collecteur de captage amont avec une tubulure d'échappement, permettant ainsi l'évacuation du flux des gaz d'échappement).

De façon plus concise, on peut donc définir l'invention par un moteur à comprenant un circuit de recirculation des gaz d'échappement vers l'admission, lequel comprend au moins un cylindre de captage, un collecteur de captage amont captant les gaz d'échappement émis par ledit cylindre de captage , une tubulure de recirculation aval, et au moins un organe de dosage conçu pour appliquer audit circuit un taux de recirculation prédéterminé, ledit organe de dosage étant choisi parmi :
- un cylindre de captage de cylindrée différenciée, si le taux de recirculation souhaité est différent de l'inverse (1/n) du nombre n de cylindres de combustion avec V_{C3}/(V_{C1}+V_{C2}+V_{C3}) = R_{EGR} , et/ou
- une vanne de commutation interposée entre le collecteur amont et la tubulure aval, pour diriger sélectivement le flux de gaz d'échappement vers la tubulure de recirculation aval ou vers une tubulure d'échappement.

Avantageusement, l'agencement du circuit de recirculation conforme à l'invention permet de ménager, en permanence ou au moins temporairement, un chemin unique, de type « boucle fermée », pour les gaz d'échappement, et ainsi de mettre en série de manière exclusive, et de préférence directe, l'admission des cylindres moteurs avec l'échappement du cylindre de captage afin de forcer les gaz d'échappement expulsés dudit cylindre de captage à emprunter effectivement ledit circuit de recirculation dont ils sont captifs.

Du fait qu'il n'y a pas, au sein du moteur conforme à l'invention, de conflit ni de compétition entre le circuit de recirculation et le circuit d'échappement, il est possible de capter les gaz d'échappement efficacement, sans perte et en maîtrisant la quantité de gaz transférée de l'échappement vers l'admission, de manière précise et reproductible, dans des proportions choisies et non subies, plutôt que de tenter avec plus ou moins de succès, comme c'est le cas avec les dispositifs antérieurs, d'aspirer lesdits gaz dans une dérivation parallèle au circuit d'échappement principal.

Bien entendu, la quantité de gaz d'échappement ainsi forcée à re-circuler dans la boucle fermée est avantageusement dosée, c'est-à-dire maîtrisée par l'organe de dosage associé à ladite boucle fermée, ledit organe permettant de définir et contrôler précisément la quantité de gaz d'échappement qui retourne vers l'admission, et par conséquent de garantir l'application reproductible d'un taux de recirculation conforme à la consigne.

Plus particulièrement, ledit organe, selon sa nature et sa disposition, peut agir soit au niveau de la portion amont du circuit de recirculation, en permettant un ajustement de la quantité globale de gaz produite à chaque cycle du moteur au niveau du cylindre de captage, grâce un aménagement idoine du volume dudit cylindre au regard des volumes des cylindres voisins, soit au niveau de la portion aval du circuit de recirculation, en sélectionnant, par un pilotage de vanne de commutation approprié, la proportion de la quantité totale des gaz d'échappement produite qui sera effectivement orientée vers l'admission (par un maintien de la vanne en configuration de recirculation sur au moins une partie du cycle du moteur), par rapport à la proportion complémentaire qui sera quant à elle expulsée vers le circuit d'échappement (par un maintien de la vanne en configuration d'échappement sur la ou les autres parties du cycle du moteur).

Avantageusement, l'aménagement portant sur la différenciation de cylindrée du cylindre de captage permet de fixer le taux de recirculation par une disposition constructive particulièrement simple, robuste, fiable, et permanente. L'aménagement portant sur l'ajout d'une vanne de commutation pourra quant à lui permettre de faire évoluer si nécessaire la consigne de taux de recirculation, en modifiant le programme de pilotage de ladite vanne, et par exemple le rapport cyclique correspondant à la durée de fermeture de ladite vanne en configuration de recirculation sur la période d'un cycle.

De surcroît, l'invention est particulièrement polyvalente et évolutive, puisqu'elle peut être aisément adaptée de manière analogue à de nombreux types de moteurs, quel que soit notamment le nombre de leurs cylindres de combustion.

D'autres objets, caractéristiques et avantages de l'invention apparaîtront plus en détail à la lecture de la description qui suit, ainsi qu'à l'aide des dessins annexés, fournis à titre illustratif et non limitatif, parmi lesquels :
- La figure 1 représente un schéma d'une première variante de réalisation de moteur à trois cylindres conforme à l'invention mettant en oeuvre un cylindre de captage de cylindrée différenciée.
- La figure 2 représente un schéma d'une seconde variante de réalisation de moteur à trois cylindres conforme à l'invention mettant en oeuvre une vanne de commutation.

La présente invention concerne un moteur à combustion 1, par exemple un moteur diesel, comprenant une pluralité de cylindres de combustion C1, C2, C3.

Ledit moteur 1 comporte de manière connue un circuit d'admission 2 pour alimenter les cylindres C1, C2, C3 avec le mélange gazeux destiné à la combustion, et contenant notamment de l'air en provenance de l'environnement extérieur, ainsi qu'un circuit d'échappement 3 permettant le rejet des gaz d'échappement, produits par la combustion, à l'extérieur.

Chaque cylindre pourra être associé à une bougie 4, d'allumage ou de chauffage selon le type de moteur. Il pourra également comprendre un turbocompresseur 5 entraîné par tout ou partie des gaz d'échappement et apte à augmenter la compression de l'air dans le circuit d'admission 2.

Selon l'invention, le moteur 1 est pourvu d'un circuit 6 de recirculation forcée et dosée des gaz d'échappement qui permet de recycler dans l'admission 2 des cylindres de combustion C1, C2, C3, selon un taux de recirculation R_{EGR} prédéterminé, dit « taux de consigne », au moins une partie des gaz d'échappement produits par au moins l'un C3 desdits cylindres.

A cet effet, ledit circuit de recirculation 6 comprend au moins un cylindre de captage C3, choisi parmi les cylindres de combustion C1, C2, C3, ainsi qu'un collecteur de captage 7 amont raccordé à l'échappement dudit cylindre de captage C3 de sorte à pouvoir capter la totalité des gaz d'échappement émis par ledit cylindre de captage. Ledit circuit de recirculation se poursuit par une tubulure de recirculation 8 aval apte à convoyer la totalité les gaz d'échappement captés par ledit collecteur 7 jusqu'à l'admission des cylindres de combustion C1, C2, C3.

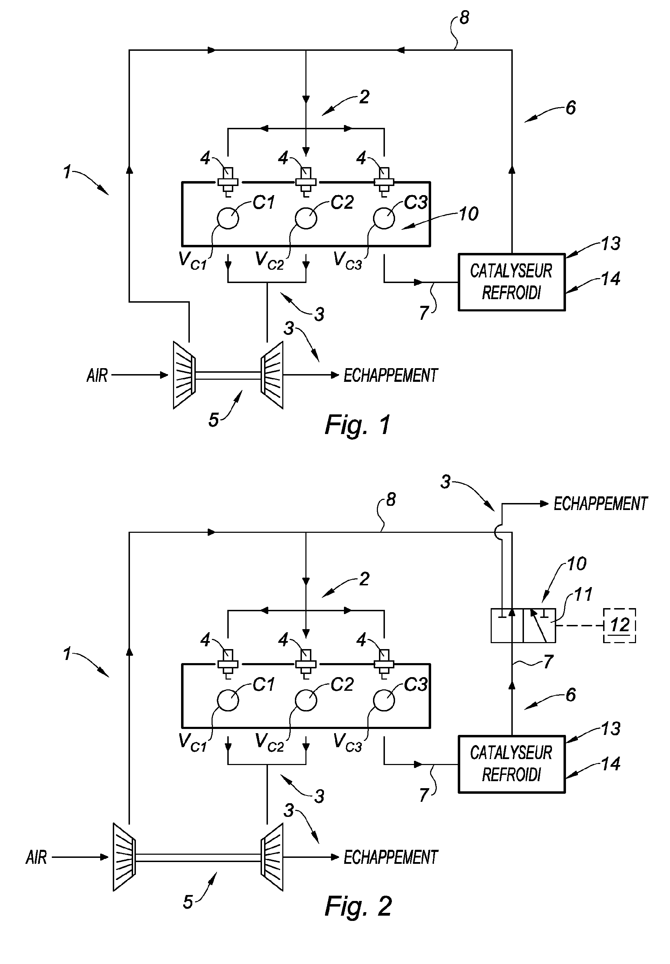

Selon l'invention, ledit circuit de recirculation 6 comporte au moins un organe de dosage 10 conçu pour appliquer audit circuit la consigne de taux de recirculation R_{EGR}, ledit organe de dosage 10 étant choisi parmi :
- un cylindre de captage C3 de cylindrée V_{C3} aménagée, tel que cela est illustré sur la figure 1, si le taux de recirculation souhaité R_{EGR} est différent de l'inverse (1/n) du nombre (n) de cylindres de combustion (n valant 3 dans l'exemple de la figure 1), la cylindrée aménagée dudit cylindre de captage se différenciant alors de la cylindrée V_{C1}, V_{C2} des autres cylindres de combustion C1, C2 de telle manière que le rapport de ladite cylindrée aménagée sur la cylindrée totale de l'ensemble des cylindres de combustion corresponde au taux de recirculation choisi, c'est-à-dire de telle manière que V_{C3} / (V_{C1}+V_{C2}+V_{C3}) = R_{EGR}, et/ou
- une vanne de commutation 11, interposée entre le collecteur de captage 7 amont et la tubulure de recirculation 6 aval, tel que cela est illustré sur la figure 2, ladite vanne de commutation 11 étant apte à passer d'une configuration de recirculation en circuit fermé (figure 2), dans laquelle ladite vanne de commutation fait communiquer le collecteur de captage 7 amont exclusivement avec la tubulure de recirculation 6 aval de sorte à diriger intégralement le flux des gaz d'échappement vers l'admission des cylindres C1, C2, C3, à une configuration d'échappement en circuit ouvert (non représentée) dans laquelle ladite vanne de commutation met en communication le collecteur de captage amont 7 avec une tubulure d'échappement 3 permettant l'évacuation du flux des gaz d'échappement.

Avantageusement, la vanne de commutation 11 conforme à l'invention forme un embranchement permettant de sélectionner la destination des gaz d'échappement, de telle sorte qu'il est possible, au cours d'un même cycle du moteur, de diriger sélectivement et temporairement le flux desdits gaz vers l'admission, ou au contraire vers l'échappement, de manière à injecter lesdits gaz d'échappement dans l'admission des cylindres à concurrence d'une quantité prédéterminée correspondant au taux de recirculation souhaité, et de rejeter l'excédent de gaz d'échappement vers le circuit d'échappement 3.

Bien que le principe de l'invention soit applicable à tout moteur à combustion, quel que soit le nombre de cylindres de combustion qu'il comprenne, le moteur 1 conforme à l'invention comporte de préférence exactement trois cylindres de combustion C1, C2, C3, tel que cela est illustré sur les figures 1 et 2.

Un tel format à trois cylindres, qui coopèrent de préférence avec un même vilebrequin selon un déphasage de 120 degrés les uns par rapport aux autres, permet notamment d'obtenir à moindre coût un moteur allégé et potentiellement peu encombrant, de conception simplifiée, qui présente de bonnes performances dynamiques et un faible niveau d'émissions polluantes.

Par ailleurs, le moteur 1 comporte de préférence, sur l'ensemble des cylindres de combustion, un unique cylindre de captage C3. Avantageusement, une telle disposition simplifie la conception de l'ensemble et minimise notamment le nombre et l'encombrement des tubulures du circuit de recirculation 6.

De préférence, le taux de recirculation de consigne R_{EGR} est sensiblement compris entre 15 % et 35 %, de préférence entre 20 % et 30 %, et préférentiellement égal à 25 %.

Selon une variante de réalisation préférentielle illustré sur la figure 1, le moteur 1 compte exactement trois cylindres, le taux de recirculation est de 25 %, et la cylindrée aménagée V_{C3} du cylindre de captage C3 est alors égale à 2/3 de celle V_{C1}, V_{C2} de chacun des deux autres cylindres moteurs C1, C2.

De la sorte, en considérant par convention que le premier et le second cylindre contribuent chacun à la cylindrée totale pour une part de volume unitaire, la totalité des gaz brûlés dans le cylindre de captage à chaque cycle du moteur, soit 2/3 de part unitaire, sera réacheminée, avantageusement par un branchement direct et permanent, vers l'admission 2, et contribuera pour 2/3 de part unitaire dans le volume total admis dans les trois cylindres, qui compte (1 + 1 + 2/3) parts. On obtiendra alors automatiquement et systématiquement un taux d'EGR effectif valant (2/3) / (1 +1 + 2/3) = 0,25 = 25 %, ce qui correspond bien au taux de consigne susmentionné.

De préférence, la vanne de commutation 11 est soit de type proportionnelle, soit de de type « tout ou rien » tel que cela est illustré sur la figure 2. Dans le cas d'une vanne tout ou rien, on peut alternativement diriger, à un instant donné, la totalité du flux de gaz d'échappement soit vers l'admission 2, lorsque ladite vanne se trouve en configuration de recirculation, soit vers un échappement 3 d'évacuation à l'air libre, lorsque ladite vanne se trouve en configuration d'échappement.

Avantageusement on pourra utiliser, pour former un tel embranchement d'orientation exclusive des gaz d'échappement, une vanne, par exemple une électrovanne, comprenant une entrée, raccordée à la sortie unique du collecteur de captage amont 7, qui est systématiquement et exclusivement emprunté par la totalité des gaz d'échappement issus du ou des cylindres de captage C3, et deux sorties, l'une débouchant sur la tubulure de recirculation aval 8 (et donc *in fine* sur le circuit d'admission 2), tubulure de recirculation aval qui sera ainsi empruntée exclusivement par les gaz d'échappement captés effectivement destinés à la recirculation, et l'autre sortie débouchant sur le circuit d'échappement 3 à l'air libre.

Par ailleurs, le moteur 1, et plus particulièrement le circuit de recirculation 6, pourra comprendre un organe d'analyse et de commande 12, associé fonctionnellement à la vanne de commutation 11, et qui est apte à estimer, lorsque la vanne de commutation se trouve en configuration de recirculation, la quantité de gaz d'échappement qui franchit ladite vanne 11 en provenance du cylindre de captage C3 et à destination de l'admission 2, et à faire passer la vanne de commutation en configuration d'échappement lorsque cette quantité estimée atteint ou franchit un seuil prédéterminé correspondant au taux de recirculation de consigne R_{EGR}.

Avantageusement, ledit organe d'analyse et de commande peut être formé par un circuit électronique et/ou un programme spécifique, éventuellement intégré au calculateur de gestion du moteur, et comporter notamment des capteurs mesurant par exemple la pression et/ou le débit des gaz d'échappement circulant dans la vanne, ainsi qu'une horloge ou tout autre dispositif permettant par exemple de synchroniser la commande de commutation avec les phases du cycle du moteur ou avec le franchissement du seuil correspondant au taux de recirculation de consigne.

Ledit organe d'analyse et de commande 12 pilote avantageusement l'alternance des basculements de la vanne 11 au cours du cycle du moteur, de sorte par exemple à provoquer et synchroniser le placement la vanne en configuration de recirculation lors de la phase de purge du cylindre de captage C3, et à maintenir cette configuration le temps nécessaire pour capter la quantité de gaz d'échappement nécessaire à l'obtention du taux de recirculation souhaité, puis à basculer ladite vanne en configuration d'échappement sur le reste du cycle pour laisser échapper l'excédent de gaz captés, puis à faire revenir la vanne en configuration de recirculation au début du cycle suivant, etc.

De préférence, le circuit de recirculation 6 comprend par ailleurs un module catalytique 13, qui peut le cas échéant être placé en amont ou bien au contraire en aval de la vanne de commutation, et qui permet de traiter les gaz d'échappement afin d'y augmenter la proportion de dihydrogène. Ce type de module catalytique est connu, le dihydrogène étant formé généralement à partir des hydrocarbures et de la vapeur d'eau présents dans les gaz d'échappement. On parle généralement de reformage, dont un exemple est décrit dans le brevet FR 2 880 657.

Cet enrichissement en dihydrogène avant le recyclage des gaz d'échappement à l'admission 2 peut notamment intervenir en faisant circuler lesdits gaz d'échappement sur un catalyseur contenant du platine.

Par ailleurs, le circuit de recirculation 6 comporte de préférence un système de refroidissement 14, qui peut avantageusement être intégré au module catalytique 13, et qui permet d'abaisser la température des gaz d'échappement.

Bien entendu, l'homme du métier sera à même de mettre en oeuvre séparément ou en combinaison au sein d'un moteur l'une ou l'autre des caractéristiques décrites dans ce qui précède, et en particulier de prévoir un organe de dosage 10 qui corresponde soit seulement à une adaptation de cylindrée, soit seulement à l'ajout d'une vanne de commutation, soit à une combinaison de ces deux éléments.

En outre, l'invention concerne bien entendu également en tant que tel un véhicule, et notamment un véhicule automobile, équipé d'un moteur conforme à l'invention.

Il est du reste remarquable que l'enseignement de invention trouve également application dans tout processus de conception d'un moteur, ou tout procédé de fabrication ou de réglage d'un moteur, et notamment d'un moteur diesel, au cours duquel on conçoit ou l'on fabrique un moteur en le dotant d'un circuit de recirculation forcée conforme à l'invention, et plus particulièrement d'un cylindre de captage de cylindrée différente de celle des autres cylindres de combustion et/ou d'une vanne de commutation formant un embranchement permettant de sélectionner la destination des gaz d'échappement, ou bien, respectivement, au cours duquel on procède au réglage du taux de recirculation de consigne, le cas échéant parmi une pluralité de taux de consigne possibles, en modifiant la cylindrée du ou des cylindres de captage ou bien les conditions de pilotage de la vanne de commutation.

## Revendications

1. *Moteur* thermique (1) comprenant une pluralité de cylindres de combustion (C1, C2, C3), ledit moteur étant **caractérisé en ce qu'il** est pourvu d'un circuit (6) de recirculation forcée et dosée des gaz d'échappement permettant de recycler dans l'admission (2) des cylindres de combustion, selon un taux de recirculation (R_{EGR}) prédéterminé, au moins une partie des gaz d'échappement produits par au moins l'un (C3) desdits cylindres (C1, C2, C3), ledit circuit de recirculation comprenant au moins un cylindre de captage (C3), choisi parmi les cylindres de combustion (C1, C2, C3), ainsi qu'un collecteur de captage (7) amont raccordé à l'échappement dudit cylindre de captage de sorte à pouvoir capter la totalité des gaz d'échappement émis par ledit cylindre de captage (C3), et se poursuivant par une tubulure de recirculation (8) aval apte à convoyer la totalité les gaz d'échappement captés par ledit collecteur (7) jusqu'à l'admission (2) des cylindres de combustion, ledit circuit de recirculation (6) comportant au moins un organe de dosage (10) conçu pour appliquer audit circuit la consigne de taux de recirculation (R_{EGR}), ledit organe de dosage étant choisi parmi :
• un cylindre de captage (C3) de cylindrée (V_{C3}) aménagée, si le taux de recirculation souhaité est différent de l'inverse (1/n) du nombre (n) de cylindres de combustion (C1, C2, C3), la cylindrée aménagée dudit cylindre de captage se différenciant alors de la cylindrée (V_{C1}, V_{C2}) des autres cylindres de combustion de telle manière que le rapport de ladite cylindrée aménagée (V_{C3}) sur la cylindrée totale de l'ensemble des cylindres de combustion corresponde au taux de recirculation (R_{EGR}) choisi, et/ou
• une vanne de commutation (11), interposée entre le collecteur de captage (7) amont et la tubulure de recirculation (8) aval, ladite vanne de commutation étant apte à passer d'une configuration de recirculation en circuit fermé, à une configuration d'échappement en circuit ouvert, et **en ce qu'**il comporte un unique cylindre de captage (C3) et exactement trois cylindres de combustion (C1, C2, C3).

2. Moteur selon l'une des revendications précédentes, **caractérisé en ce que** le taux de recirculation de consigne (R_{EGR}) est sensiblement compris entre 20 % et 30 %, et de préférence égal à 25 %.

3. Moteur selon la revendication précédente, **caractérisé en ce que** le taux de recirculation (R_{EGR}) est de 25 % et **en ce que** la cylindrée aménagée (V_{C3}) du cylindre de captage (C3) est égale à 2/3 de celle (V_{C1}, V_{C2}) de chacun des deux autres cylindres moteurs.

4. Moteur selon l'une des revendications précédentes, **caractérisé en ce que** la vanne de commutation (11) est de type proportionnelle ou de type tout ou rien.

5. Moteur selon l'une des revendications précédentes, **caractérisé en ce qu'il** comprend un organe d'analyse et de commande (12), associé fonctionnellement à la vanne de commutation (11), qui est apte à estimer, lorsque ladite vanne se trouve en configuration de recirculation, la quantité de gaz d'échappement qui franchit ladite vanne en provenance du cylindre de captage (C3) et à destination de l'admission (2), et à faire passer la vanne en configuration d'échappement lorsque cette quantité estimée atteint ou franchit un seuil prédéterminé correspondant au taux de recirculation de consigne (R_{EGR}).

6. Moteur selon l'une des revendications précédentes, **caractérisé en ce que** le circuit de recirculation (6) comprend un module catalytique (13) permettant de traiter les gaz d'échappement afin d'y augmenter la proportion de dihydrogène.

7. Moteur selon l'une des revendications précédentes, **caractérisé en ce que** le circuit de recirculation (6) comporte un système de refroidissement (14) permettant d'abaisser la température des gaz d'échappement.

8. Véhicule, notamment véhicule automobile, équipé d'un moteur selon l'une des revendications précédentes.
